# EUROPÄISCHE PATENTSCHRIFT

(11) **EP 2 011 600 B1**
(45) Veröffentlichungstag und Bekanntmachung des Hinweises auf die Patenterteilung: **15.10.2014**
(21) Anmeldenummer: 08011839.1
(22) Anmeldetag: 01.07.2008
(51) Int. Cl.: B23K 26/40

(54) **Vorrichtung zum Schneiden von technischen Geweben, insbesondere für Airbags**
Device for cutting technical fabric, in particular airbags
Dispositif de coupe de tissu technique, en particulier pour airbag

(30) Priorität: 04.07.2007 DE 202007009631 U
(43) Veröffentlichungstag der Anmeldung: 07.01.2009
(73) Patentinhaber: Held Systems AG, 6022 Grosswangen (CH)
(72) Erfinder: Held, Jürgen, 63150 Heusenstamm (DE); Held, Siegfried, 61350 Bad Homburg (DE); Zinke, Achim, 63150 Heusenstamm (DE)
(74) Vertreter: Pfenning, Meinig & Partner GbR

(56) Entgegenhaltungen:
- WO-A1-97/26830
- DE-A1- 10 234 011
- US-A1- 2005 098 547

## Beschreibung

Die Erfindung betrifft eine Vorrichtung zum Schneiden von technischen Geweben, insbesondere für Airbags, mittels Laserstrahlung gemäß dem Oberbegriff von Anspruch 1.

Solche in Rede stehende Gewebe werden üblicherweise mehrlagig übereinander gelegt oder gefaltet und dann zwischen den einzelnen Lagen Trennschichten aus einer Folie oder Papier platziert, die nach dem Schneiden mit Laserstrahlung sehr aufwändig wieder entfernt werden müssen.

Bei Versuchen diese Gewebe einlagig zu schneiden wirkt sich die begrenzte mögliche Gewebebreite, die mit einem auch auslenkbaren Lasersstrahl bearbeitet werden kann, nachteilig auf die Fertigungskosten aus. Dem kann zwar durch den Einsatz mehrerer Laserstrahlen entgegengetreten werden, die mit schwenkbaren reflektierenden Elementen (Scannerspiegeln) auf das zu schneidende Gewebe gerichtet werden. Fällt aber ein einziges solches stationär angeordnetes reflektierendes Element aus, führt dies zum Ausfall der Anlage bis ein Austausch oder eine Reparatur erfolgt ist.

Auch die Bearbeitungsgeschwindigkeit und Flexibilität so ausgebildeter Anlagen ist begrenzt.

Aus der DE 102 34 011 A1 ist ein Schneidsystem bekannt, das zum Schneiden von Textilien geeignet ist. Dabei werden Umlenkspiegel mit einem Galvanometer-Scanner eingesetzt um einen Laserstrahl zum Schneiden auf den Textilstoff zu richten.

Es ist daher Aufgabe der Erfindung, Möglichkeiten für das Schneiden von Gewebe für Airbags mit erhöhter Flexibilität, Bearbeitungsgeschwindigkeit und Zuverlässigkeit, zu schaffen.

Erfindungsgemäß wird diese Aufgabe mit einer Vorrichtung, die die Merkmale des Anspruchs 1 aufweist, gelöst.

Vorteilhafte Ausgestaltungen und Weiterbildungen der Erfindung können mit in untergeordneten Ansprüchen bezeichneten Merkmalen erreicht werden.

Eine erfindungsgemäße Vorrichtung ist dabei so ausgebildet, dass das Gewebe eine Vorschubbewegung entlang einer Achse ausführt. Dabei mindestens ein auslenkbarer Laserstrahl zum Schneiden des Gewebes mit vorgegebenen Randkonturen auf das Gewebe gerichtet wird. Der Laserstrahl wird mit einem um mindestens eine Achse schwenkbaren reflektierenden Element, das an einem Portal oberhalb des Gewebes angeordnet ist, entsprechend der gewünschten Randkonturen ausgelenkt und gleichzeitig in einem Winkel zur Vorschubachsrichtung des Gewebes mit einem Antrieb am Portal bewegt. Dabei sind Bewegungsrichtungen und auch unterschiedliche Weglängen in den beiden Richtungen möglich.

Dadurch kann eine größere Gewebebreite mit erhöhter Bearbeitungsgeschwindigkeit berücksichtigt werden. Es kann in Remote-Technologie gearbeitet werden.

Die Flexibilität, Bearbeitungsgeschwindigkeit und Zuverlässigkeit der erfindungsgemäßen Vorrichtung kann weiter dadurch erhöht werden, in dem zwei oder mehr als zwei solcher schwenkbarer und bewegbarer reflektierender Elemente vorhanden sind und diese zusätzlich auch um zwei Achsen verschwenkt werden können. Dadurch kann ein Schneiden mit mehreren Laserstrahlen gleichzeitig an unterschiedlichen Positionen des Gewebes erfolgen. Die Bewegung und Auslenkung der Laserstrahlen kann gemäß der auszubildenden Randkonturen optimiert werden.

Es kann ein oder es können auch mehrere Portale an einer Vorrichtung mit schwenk- und bewegbaren reflektierenden Elementen vorhanden sein.

Ein oder mehrere Portale können auch in Vorschubachsrichtung des Gewebes bewegt werden, wobei dann die daran angeordneten reflektierenden Elemente ebenfalls in diese Richtung mit bewegt werden, so dass eine "überlagerte Vorschubbewegung" erreichbar ist, die zu höheren Bearbeitungsgeschwindigkeiten führen kann.

Die unterschiedlichen Bewegungen und Schwenkungen können elektronisch gesteuert werden. Hierzu können die jeweiligen Antriebe für das Schwenken und Bewegen der reflektierenden Elemente und auch für die Bewegung des einen oder mehrerer Portale an eine gemeinsame elektronische Steuerung angeschlossen und von dieser programmgesteuert manipuliert werden.

So ist eine Überlagerung mehrerer Bewegungen und auch die Auslenkung der Laserstrahlen durch Schwenken der reflektierenden Elemente gleichzeitig möglich.

Bei Ausfall mindestens eines Antriebs kann durch entsprechende Programmänderung reagiert und zumindest mit etwas reduzierter Bearbeitungsgeschwindigkeit weiter gearbeitet werden.

Günstig ist es in diesem Fall oder ggf. auch bei sehr unterschiedlichen zum Teil kompliziert auszubildenden Randkonturen am zu schneidenden Gewebe auch die Vorschubgeschwindigkeit des Gewebes zu variieren, was ebenfalls mit der elektronischen Steuerung möglich ist. Dabei kann das Gewebe schneller oder auch langsamer bewegt werden.

Die Bewegungsachse der schwenkbaren reflektierenden Elemente kann in einem Winkel zwischen 75° und 90° in Bezug zur Vorschubbewegungsachse des Gewebes ausgerichtet sein. Dabei können kleinere als 90° Winkel unter Berücksichtigung des beim Vorschub des Gewebes zurück gelegten Weges günstig sein.

Das eine oder mehrere Portale können dann entsprechend mit ihren Trägern ausgerichtet sein. Ihre Führungen sollten aber die Vorschubachsrichtung des Gewebes berücksichtigen und deren Bewegung parallel dazu erfolgen.

An einem Portal können vorteilhaft schwenkbare reflektierende Elemente an zwei Seiten, also an der in Vorschubrichtung des Gewebes und der dieser gegenüberliegenden Seite angeordnet sein. Es ist aber auch eine Anordnung unterhalb bzw. zwischen einem Doppelträger allein oder zusätzlich möglich. An einem Portal kann auch parallel zur Achse der Bewegung eines reflektierenden Elementes ein so ausgerichteter Schlitz vorhanden sein, durch den der von diesem auf das Gewebe reflektierend ausgelenkte Laserstrahl hindurch treten kann. Bei mehreren an einem Portal angebrachten schwenk- und bewegbaren reflektierenden Elementen kann für jedes ein solcher Schlitz vorhanden sein.

An einem Portal ist bevorzugt für jedes einzelne schwenk- und bewegbare reflektierende Element ein weiteres bevorzugt statisch angeordnetes weiteres reflektierendes Element vorhanden, mit dem ein von einer Laserlichtquelle emittierter Laserstrahl auf ein schwenk- und bewegbares reflektierendes Element gerichtet werden kann. Dies erfolgt in der Regel durch Reflexion in einem Winkel von 90°.

Mehrere schwenk- und bewegbare reflektierende Elemente sollten parallel zueinander beim Schneiden bewegt werden. Dabei können aber jeweils unterschiedliche Wege zurück gelegt sein bzw. werden. Jedes einzelne dieser reflektierenden Elemente und/oder Portale soll von einer elektronischen Steuerung manipuliert aber dabei trotzdem unabhängig voneinander verschwenkt und bewegt werden können, wobei unterschiedliche Geschwindigkeiten und Beschleunigungen auftreten können.

Es können Laserlichtquellen eingesetzt werden, deren Strahlung besonders gut vom Gewebe absorbiert wird, die Auswahl geeigneter Laserlichtquellen kann unter diesem Gesichtspunkt erfolgen.

## Patentansprüche

1. Vorrichtung zum Schneiden von technischen Geweben, insbesondere für Airbags, mit mindestens einem auslenkbaren Laserstrahl, der auf ein entlang einer Achse eine Vorschubbewegung ausführendes Gewebe gerichtet ist,
dabei mehrere um mindestens eine Achse schwenkbares reflektierende Elemente auf einem Portal oberhalb des einlagigen Gewebes angeordnet und mittels eines Antriebs in einem Winkel zur Vorschubachsrichtung des Gewebes bewegbar und jeweils ein Laserstrahl einer Laserlichtquelle auf das reflektierende Element gerichtet ist, **dadurch gekennzeichnet, dass**
jedes einzelne reflektierende Element von einer elektronischen Steuerung unabhängig voneinander verschwenk- und in einem Winkel zur Vorschubachsrichtung des Gewebes mit einem Antrieb am Portal bewegbar ist, so dass unterschiedliche Geschwindigkeiten und Beschleunigungen auftreten können.

2. Vorrichtung nach Anspruch 1, **dadurch gekennzeichnet, dass** auf einem zweiten Portal mindestens ein zweites schwenkbares reflektierendes Element, auf das ein Laserstrahl einer Laserlichtquelle gerichtet ist, mittels eines An-, triebs in einem Winkel in Bezug zur Vorschubachsrichtung des Gewebes bewegbar ist.

3. Vorrichtung nach Anspruch 1 oder 2, **dadurch gekennzeichnet, dass** das/die Portal(e) in Vorschubachsrichtung des Gewebes bewegbar ist/sind.

4. Vorrichtung nach einem der vorhergehenden Ansprüche, **dadurch gekennzeichnet**, das die reflektierenden Elemente um zwei senkrecht zueinander ausgerichtete Achsen schwenkbar sind.

5. Vorrichtung nach einem der vorhergehenden Ansprüche, **dadurch gekennzeichnet, dass** Antriebe für die Bewegung und Schwenkung der reflektierenden Elemente an eine elektronische Steuerung angeschlossen sind.

6. Vorrichtung nach Anspruch 4, **dadurch gekennzeichnet, dass** der/die Antrieb(e) für die Bewegung des/der Portale(s) an die elektronische Steuerung angeschlossen ist/sind.

7. Vorrichtung nach einem der vorhergehenden Ansprüche, **dadurch gekennzeichnet, dass** die Geschwindigkeit der Vorschubbewegung des Gewebes steuerbar ist.

8. Vorrichtung nach einem der vorhergehenden Ansprüche, **dadurch gekennzeichnet, dass** die Vorschubbewegung des Gewebes auf einem Wander- oder Förderbandrost erfolgt.

9. Vorrichtung nach einem der vorhergehenden Ansprüche, **dadurch gekennzeichnet, dass** die Steuerung der Vorschubbewegung des Gewebes mit der elektronischen Steuerung erfolgt.

10. Vorrichtung nach einem der vorhergehenden Ansprüche, **dadurch gekennzeichnet, dass** die Bewegung der reflektierenden Elemente in einem Winkel im Bereich 75° bis 90° in Bezug zur Vorschubachsrichtung des Gewebes erfolgt.

11. Vorrichtung nach einem der vorhergehenden Ansprüche, **dadurch gekennzeichnet, dass** zwei reflektierende Elemente an zwei Seiten eines Portals in Bezug zur Vorschubachsrichtung des Gewebes angeordnet sind.

12. Vorrichtung nach einem der vorhergehenden Ansprüche, **dadurch gekennzeichnet, dass** ein Laserstrahl auf ein statisch an einem Portal angeordnetes reflektierendes Element und von diesem auf ein schwenkbares und bewegbares reflektierendes Element gerichtet ist.

13. Vorrichtung nach einem der vorhergehenden Ansprüche, **dadurch gekennzeichnet, dass** die Bewegungsachsrichtungen mehrerer schwenkbarer reflektierender Elemente parallel zueinander ausgerichtet sind.

14. Vorrichtung nach einem der vorhergehenden Ansprüche, **dadurch gekennzeichnet, dass** an einem Portal für ein schwenk- und bewegbares reflektierendes Element ein parallel zur Achse der Bewegung ausgerichteter Schlitz vorhanden ist, durch den ein Laserstrahl zum Schneiden auf das Gewebe gerichtet ist.

## Claims

1. An apparatus for the cutting of technical fabrics, in particular for airbags, having at least one deflectable laser beam which is directed to a fabric carrying out a feed movement along an axis, wherein a plurality of
reflecting elements pivotable around an axis are arranged on a portal above the single-layer fabric and can be moved by means of a drive at an angle to the feed axis direction of the fabric and a laser beam of a laser light source is directed to the reflecting element,
**characterized in that** every single pivotable and in an angle in the feed direction of the fabric movable reflecting element can be moved by a drive at the portal independently from each other by an electronic control, such that different speeds and accelerations being able to occur.

2. An apparatus in accordance with claim 1, **characterized in that** at least one second pivotable reflecting element to which a laser beam of a laser light source is directed is movable on a second portal by means of a drive at an angle with respect to the feed axis direction of the fabric.

3. An apparatus in accordance with claim 1 or claim 2, **characterized in that** the portal(s) is/are movable in the feed axis direction of the fabric.

4. An apparatus in accordance with one of the preceding claims, **characterized in that** the reflecting element(s) are pivotable around two axes aligned perpendicular to one another.

5. An apparatus in accordance with one of the preceding claims, **characterized in that** drives are connected to an electronic control for the movement and pivoting of the reflecting elements.

6. An apparatus in accordance with claim 4, **characterized in that** the drive(s) for the movement of the portal(s) is/are connected to the electronic control.

7. An apparatus in accordance with one of the preceding claims, **characterized in that** the speed of the feed movement of the fabric can be controlled.

8. An apparatus in accordance with one of the preceding claims, **characterized in that** the feed movement of the fabric takes place on a traveling grate or a conveyor belt grate.

9. An apparatus in accordance with one of the preceding claims, **characterized in that** the control of the feed movement of the fabric takes place using the electronic control.

10. An apparatus in accordance with one of the preceding claims, **characterized in that** the movement of the reflecting elements takes place at an angle in the range of 75° to 90° with respect to the feed axis direction of the fabric.

11. An apparatus in accordance with one of the preceding claims, **characterized in that** two reflecting elements are arranged at two sides of a portal with respect to the feed axis direction of the fabric.

12. An apparatus in accordance with one of the preceding claims, **characterized in that** a laser beam is directed to a reflecting element arranged at a portal in a static manner and is directed by said reflecting element onto a pivotable and movable reflecting element.

13. An apparatus in accordance with one of the preceding claims, **characterized in that** the movement axis directions of a plurality of pivotable reflecting elements are aligned parallel to one another.

14. An apparatus in accordance with one of the preceding claims, **characterized in that** a slot aligned parallel to the axis of the movement is present on a portal for a pivotable and movable reflecting element and a laser beam is directed onto the fabric by it for cutting.

## Revendications

1. Dispositif pour couper des tissus techniques, en particulier pour des airbags, comportant au moins un faisceau laser déviable, qui est dirigé sur un tissu exécutant un mouvement d'avancement le long d'un axe,
plusieurs éléments réfléchissants, pouvant pivoter autour d'au moins un axe, étant disposés sur un portique au-dessus du tissu monocouche, et pouvant à l'aide d'un organe d'entraînement être déplacés en faisant un certain angle avec la direction de l'axe d'avancement du tissu, un faisceau laser provenant d'une source de lumière laser étant dirigé sur chacun des éléments réfléchissants,
**caractérisé en ce que** chaque élément réfléchissant individuel peut, sous l'effet d'une commande électronique, subir un pivotement indépendamment les uns des autres, et se déplacer selon un certain angle avec la direction de l'axe d'avancement du tissu à l'aide d'un organe d'entraînement situé contre le portique, de sorte que puissent apparaître des vitesses différentes et des accélérations différentes.

2. Dispositif selon la revendication 1, **caractérisé en ce qu'**au moins un deuxième élément réfléchissant pivotant, sur lequel est dirigé un faisceau laser d'une source de lumière laser, peut se déplacer sur un deuxième portique, à l'aide d'un organe d'entraînement, selon un certain angle par rapport à la direction de l'axe d'avancement du tissu.

3. Dispositif selon les revendications 1 ou 2, **caractérisé en ce que** le ou les portiques peuvent se déplacer dans la direction de l'axe d'avancement du tissu.

4. Dispositif selon l'une des revendications précédentes, **caractérisé en ce que** les éléments réfléchissants peuvent pivoter autour de deux axes orientés perpendiculairement l'un par rapport à l'autre.

5. Dispositif selon l'une des revendications précédentes, **caractérisé en ce que** des organes d'entraînement destinés au déplacement et au pivotement des éléments réfléchissants sont raccordés à une commande électronique.

6. Dispositif selon la revendication 4, **caractérisé en ce que** le ou les organes d'entraînement destinés au déplacement du ou des portiques sont raccordés à la commande électronique.

7. Dispositif selon l'une des revendications précédentes, **caractérisé en ce que** la vitesse du mouvement d'avancement du tissu est réglable.

8. Dispositif selon l'une des revendications précédentes, **caractérisé en ce que** le mouvement d'avancement du tissu a lieu sur une grille à chaîne sans fin ou sur une grille à bande transporteuse.

9. Dispositif selon l'une des revendications précédentes, **caractérisé en ce que** la commande du mouvement d'avancement du tissu a lieu grâce à la commande électronique.

10. Dispositif selon l'une des revendications précédentes, **caractérisé en ce que** le déplacement des éléments réfléchissants a lieu selon un angle compris dans la plage de 75 à 90° par rapport à la direction de l'axe d'avancement du tissu.

11. Dispositif selon l'une des revendications précédentes, **caractérisé en ce que** deux éléments réfléchissants sont disposés sur deux côtés d'un portique, par rapport à la direction de l'axe d'avancement du tissu.

12. Dispositif selon l'une des revendications précédentes, **caractérisé en ce qu'**un faisceau laser est dirigé sur un élément réfléchissant statiquement disposé contre un portique, et, à partir de cet élément, sur un élément réfléchissant pivotant et mobile.

13. Dispositif selon l'une des revendications précédentes, **caractérisé en ce que** les directions de l'axe de déplacement de plusieurs éléments réfléchissants pivotants sont orientés parallèlement les unes aux autres.

14. Dispositif selon l'une des revendications précédentes, **caractérisé en ce qu'**est présente, contre un portique pour un élément réfléchissant pivotant et mobile, une fente orientée parallèlement à l'axe du déplacement, à travers laquelle un faisceau laser de coupe est dirigé sur le tissu.
